# EUROPEAN PATENT SPECIFICATION

(11) **EP 3 506 432 B1**
(45) Date of publication and mention of the grant of the patent: **03.08.2022**
(21) Application number: 18214405.5
(22) Date of filing: 20.12.2018
(51) Int. Cl.: H01R 4/48, H01R 13/641, H02M 7/00

(54) **TERMINAL DEVICE AND POWER CONVERTER INCLUDING THE SAME**
ENDGERÄTEVORRICHTUNG UND STROMWANDLER DAMIT
DISPOSITIF TERMINAL ET CONVERTISSEUR DE PUISSANCE LE COMPRENANT

(30) Priority: 27.12.2017 JP 2017252583
(43) Date of publication of application: 03.07.2019
(73) Proprietor: Panasonic Intellectual Property Management Co., Ltd., Osaka-shi, Osaka 540-6207 (JP)
(72) Inventor: Nakamoto, Atsushi, Osaka, 540-6207 (JP); Kamimura, Tsuyoshi, Osaka, 540-6207 (JP)
(74) Representative: Appelt, Christian W.

(56) References cited:
- EP-B1- 3 367 509
- JP-A- H07 263 039
- JP-A- H09 283 192
- JP-A- S52 145 788
- JP-A- 2004 087 340
- JP-A- 2006 012 635
- JP-U- S5 831 675

## Description

### Technical Field

The present disclosure relates to a terminal device and a power converter including the terminal device.

### Background Art

A known terminal device has a quick connection structure which enables connection without using a screw.

JP 2002-151172 A describes a terminal device in which an electric wire inserted through an electric wire insertion hole is elastically held and supported between a lock spring and a terminal which is an electrically conductive member.

In such a terminal device, however, if the electric wire is not inserted to reach a prescribed location in the terminal device, the electric wire and the terminal may not be appropriately connected to each other. It is possible to determine whether or not the electric wire is inserted to reach the prescribed location based on a response felt by a hand at the time of the insertion, but a tip of the electric wire may be caught on the way of the insertion, and therefore, such a method is unreliable.

JP H09 283192 A discloses the preamble of claim 1. It discloses a terminal board with connection confirming indication. In a terminal board, a connection mechanism containing section communicating a conductor insertion hole, and a conductor connection confirming mechanism containing section are provided inside a housing. A connection terminal plate is mounted in the connection mechanism containing section along the extension face of the inner walls of the conductor insertion holes, and a conductor falling-out prevention piece and a conductor pressing piece are successively mounted along a conductor insertion direction at the opposite position thereof. A wedge movement direction conversion mechanism energized by a spring is mounted in the conductor connection confirming mechanism containing section, and a connection confirming indication piece having an indication face is integrally provided in the wedge movement direction conversion mechanism.

JP H07 263 039 A discloses a quick coupling terminal board. The terminal board has an inserting hole in an end surface part so as to respectively insert a bipolar terminal of a cable to be connected, and has a window part on an upper surface so as to confirm an inserting condition of the terminal. In the display boards, though the rear parts normally seal the window part by being pushed by an elastic body such as a coil spring, when the terminal is inserted, they are slidingly moved by the tip, and the terminal enters up to a position being pressed by a lock spring, and when it is electrically reliably connected, the window part is put in a completely opening condition. When surfaces of the display boards and a surface of a rail are colored differently from each other, a sealing and opening condition of the window part can be easily confirmed.

JP 2006 012635 A discloses a quick connection terminal device. A terminal plate which is electrically connected to the conductor line of an electric wire inserted from the electric wire insertion hole, and an connection completion display member for displaying connection completion status of the conductor line to the terminal plate are housed inside the body of device. The connection completion display member comprises a display part which is arranged in free advancing and retreating between the position facing the window hole formed on the surface of the device and the position of retreating from the window hole: a coil spring which energizes the display part in the direction retreating from the window hole, and a contact part which is provided integrally with the display part, receiving pushing force of the conductor line by contacting the tip part of the conductor line inserted from the electric wire insertion hole. When the conductor line of the electric wire is inserted from the electric wire insertion hole, the display part moves to the position exposed in the window hole coping with the energizing force of the coil spring, by the pushing force of the conductor line received by the contact part.

### Summary of Invention

An object of the present disclosure is to provide a terminal device which enables visual confirmation of insertion of a connection target to reach a prescribed location in the terminal device and a power converter including the terminal device. The object of the present disclosure is solved by claim 1. Advantageous embodiments are described by the dependent claims. Embodiments not falling under the scope of the claims should be understood as examples useful for understanding the present disclosure.

A terminal device of one aspect according to the present disclosure includes a housing, a lock portion, and an indicator. The housing accommodates a conductor. The housing has an insertion hole through which a connection target is to be inserted. The lock portion is configured to hold the connection target inserted through the insertion hole into the housing between the lock portion and the conductor to restrict movement of the connection target in a direction opposite to an insertion direction of the connection target. The indicator is accommodated in the housing and is located on an opposite side of the lock portion from the insertion hole in the insertion direction. The indicator is configured to be pushed by the connection target to move in a mode including linear movement from a first position to a second position. The housing further includes a display section. Part of the indicator is displayable through the display section to an outer side of the housing. A display mode of the display section is different between a case where the indicator is in the first position and a case where the indicator is in the second position.

Moreover, a power converter of one aspect according to the present disclosure includes the terminal device and a power conversion circuit electrically connected to the conductor of the terminal device.

### Brief Description of Drawings

Among figures 1-10, it is mentioned that only figures 2A, 2B, 3A, 3B and 10 show embodiments of the present invention. All the other figures are further examples all not according to the present invention.
FIG. 1A is a front sectional view schematically illustrating a terminal device of a first example useful for understanding the present disclosure;
FIG. 1B is a front sectional view illustrating the terminal device in which a connection target is inserted;
FIG. 2A is a front sectional view schematically illustrating a terminal device of an embodiment according to the present disclosure, the embodiment being a first variation of the first example;
FIG. 2B is a front sectional view illustrating the terminal device of FIG. 2A in which a connection target is inserted;
FIG. 3A is a front sectional view schematically illustrating a terminal device of a second variation of the first embodiment;
FIG. 3B is a front sectional view illustrating the terminal device of FIG. 3A in which a connection target is inserted;
FIG. 4A is a front sectional view schematically illustrating a terminal device of a third variation of the first example;
FIG. 4B is a front sectional view illustrating the terminal device of FIG. 4A in which a connection target is inserted;
FIG. 5A is a front sectional view schematically illustrating a terminal device of a second example useful for understanding the present disclosure;
FIG. 5B is a front sectional view illustrating the terminal device of FIG. 5A in which a connection target is inserted;
FIG. 6A is a front sectional view schematically illustrating a terminal device of a first variation of the second example;
FIG. 6B is a front sectional view illustrating the terminal device of FIG. 6A in which a connection target is inserted;
FIG. 7A is a front sectional view schematically illustrating a terminal device of a second variation of the second example;
FIG. 7B is a front sectional view illustrating the terminal device of FIG. 7A in which a connection target is inserted;
FIG. 8A is a front sectional view schematically illustrating a terminal device of a third example useful for understanding the present disclosure;
FIG. 8B is a front sectional view illustrating the terminal device of FIG. 8A in which a connection target is inserted;
FIG. 9A is a front sectional view schematically illustrating a terminal device of a first variation of the third example;
FIG. 9B is a front sectional view illustrating the terminal device of FIG. 9A in which a connection target is inserted; and
FIG. 10 is a block diagram schematically illustrating a power converter including terminal devices of any one of the first to third examples and their variations according to the present disclosure.

### Description of Embodiments and Examples

The present disclosure relates to terminal devices and power converters including the terminal devices and, more specifically, to a terminal device connectable to a connection target through insertion of the connection target thereinto and a power converter including the terminal device.

### [Terminal Device]

### (First Example)

### (1) Schema

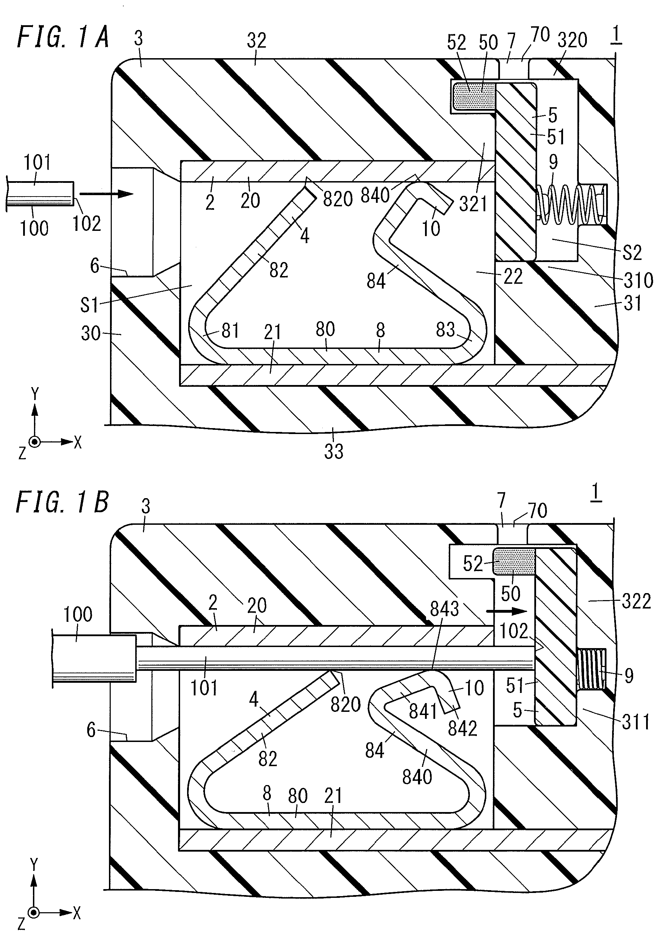

As illustrated in FIGS. 1A and 1B, a terminal device 1 of a first example is a quick connection terminal connectable to a connection target 100 through insertion of the connection target 100 thereinto. The terminal device 1 includes a conductor 2, a housing 3, a lock portion 4, and an indicator 5.

In the present example, the connection target 100 is an electric wire. The electric wire is an insulated electric wire including a core wire and an insulator covering the core wire. The core wire is conductive. The core wire is exposed at a tip portion of the electric wire, that is, a tip portion 101 of the connection target 100. The core wire may be a single wire including one conductor wire or a twisted cable including a plurality of conductor wires. Alternatively, the connection target 100 may include a terminal attached to a tip of a core wire.

The conductor 2, the lock portion 4, and the indicator 5 are accommodated in the housing 3. The housing 3 has an insertion hole 6 and a display section 7. The connection target 100 is to be inserted through the insertion hole 6. The lock portion 4 is configured to hold the connection target 100 inserted through the insertion hole 6 into the housing 3 between the lock portion 4 and the conductor 2 to restrict movement in a direction opposite to an insertion direction of the connection target 100.

The indicator 5 is located on an opposite side of the lock portion 4 from the insertion hole 6 in the insertion direction. The indicator 5 is configured to be pushed by the connection target 100 to move in a mode including linear movement from a first position to a second position.

Part of the indicator 5 is displayable through the display section 7 to an outer side of the housing 3. A display mode of the display section 7, that is, how the indicator 5 appears through the display section 7, is different between a case where the indicator 5 is in the first position and a case where the indicator 5 is in the second position.

The display section 7 is a through hole 70 penetrating through the housing 3 to be open in a direction traverse to the insertion direction of the connection target 100. In the present example, "a direction traverse to the insertion direction of the connection target 100" is a direction orthogonal to the insertion direction of the connection target 100.

In the following description, the insertion direction of the connection target 100 is defined as a positive direction of the X axis and a direction opposite to the positive direction is defined as a negative direction of the X axis. Moreover, of directions orthogonal to the X axis direction, a direction in which the through hole 70 is open, that is, of penetration directions of the through hole 70, a direction toward the outer side of the housing 3, is defined as a positive direction of the Y axis, and a direction opposite to the positive direction is defined as a negative direction of the Y axis. A direction orthogonal to both the X-axis direction and the Y-axis direction is defined as the Z-axis direction. Note that dimensions and a positional relationship of components in the drawings do not necessarily match actual dimensions and an actual positional relationship of the components.

### (2) Details

Configurations of the terminal device 1 will be described in detail below.

The terminal device 1 includes a first spring 8 and a second spring 9 in addition to the conductor 2, the housing 3, and the indicator 5. Part of the first spring 8 is the lock portion 4. The second spring 9 is configured to apply elastic force to the indicator 5.

### (2-1) Housing

The housing 3 is made of an electrically insulative material. The housing 3 is made of, for example, a synthetic resin. The housing 3 has a box-like shape and has a space therein, and in the space, the conductor 2, the first spring 8, the indicator 5, and the second spring 9 are accommodated.

The housing 3 integrally includes two walls 30 and 31 facing each other in the X-axis direction, two walls 32 and 33 facing each other in the Y-axis direction, and two walls facing each other in the Z-axis direction. The wall 30 is located between negative-side ends of the two walls 32 and 33 in the X-axis direction, and the wall 31 is located between positive-side ends of the two walls 32 and 33 in the X-axis direction. One of the two walls facing each other in the Z-axis direction is located between negative-side ends of the two walls 32 and 33 in the Z-axis direction, and the other of the two walls facing each other in the Z-axis direction is located between positive-side ends of the two walls 32 and 33 in the Z-axis direction.

The housing 3 has a first space S1 and a second space S2 therein. The first spring 8 and the conductor 2 are accommodated in the first space S1. The indicator 5 and the second spring 9 are accommodated in the second space S2. The first space S1 is in communication with the second space S2. The second space S2 extends to the wall 32 and the wall 31 of the housing 3.

The insertion hole 6 is a hole directly in communication with the first space S1. The insertion hole 6 penetrates through the wall 30 of the housing 3 in the X-axis direction. The insertion hole 6 is directly in communication with a positive-side area of the first space S1 in the Y-axis direction. The insertion hole 6 is, in the X-axis direction, located to face a negative-side area of the second space S2 in the Y-axis direction.

The through hole 70 is a hole directly in communication with the second space S2. The through hole 70 and the second space S2 penetrate through the wall 32 of the housing 3 in the Y-axis direction. The location of the through hole 70 in the Z-axis direction is, in the present example, the same as the position of the insertion hole 6 in the Z-axis direction.

In the first space S1, the conductor 2 is accommodated in areas at both ends in the Y-axis direction and in an area at one end in the Z-axis direction. In the first space S1, the first spring 8 is accommodated in an area surrounded by the conductor 2. The second space S2 accommodates the indicator 5 and the second spring 9 linearly movably in both the positive and negative directions of the X axis.

### (2-2) Conductor

The conductor 2 is formed of a conductive metal plate. The conductor 2 is made of, for example, copper. The conductor 2 is C-shaped when viewed in the X-axis direction. The conductor 2 includes a first conductor portion 20, a second conductor portion 21, and a third conductor portion 22. The first conductor portion 20 is disposed in a positive-side end area of the first space S1 in the Y-axis direction. The second conductor portion 21 is disposed in a negative-side area of the first space S1 in the Y-axis direction. The third conductor portion 22 is disposed in a positive-side end area of the first space S1 in the Z-axis direction or a negative-side end area of the first space S1 in the Z-axis direction. The first conductor portion 20 and the second conductor portion 21 are connected to each other by the third conductor portion 22. The conductor 2 is separate from the first spring 8.

### (2-3) First Spring

The first spring 8 is formed of an elastic metal plate. The first spring 8 is made of, for example, stainless steel. The first spring 8 is combined with an inner side of the conductor 2. The first spring 8 includes the lock portion 4 and a pressing portion 10.

The pressing portion 10 is located between the lock portion 4 and the indicator 5. The pressing portion 10 is configured to press the connection target 100 against the conductor 2 to restrict movement of the connection target 100 in a direction traverse to the insertion direction.

In the positive direction of the Y axis, that is, in a first direction in which the through hole 70 is open, the lock portion 4, the first conductor portion 20 of the conductor 2, and the through hole 70 are aligned in this order.

The first spring 8 includes a body 80, a lock section 82, and a pressing section 84. The body 80 has a flat-plate shape. The lock section 82 has a flat-plate shape. The lock section 82 is connected via an arc-like connection section 81 to a negative-side end of the body 80 in the X-axis direction. The pressing section 84 is connected via an arc-like connection section 83 to a positive-side end of the body 80 in the X-axis direction. The body 80 lies on the second conductor portion 21 of the conductor 2. The lock section 82 is the lock portion 4. The pressing section 84 is the pressing portion 10.

The lock section 82 has a tip edge 820 which is closest to the first conductor portion 20. When the tip edge 820 holds the connection target 100 between the tip edge 820 and the first conductor portion 20, the tip edge 820 bites into the connection target 100, thereby restricting movement of the connection target 100 in the negative direction of the X axis, that is, in a direction opposite to the insertion direction.

The pressing section 84 has a tip portion which is close to the first conductor portion 20, and the tip portion is provided with a contact surface 840 which is to be in contact with the connection target 100. The contact surface 840 is an arc-like curved surface in the present example but may be a flat surface. In the pressing section 84, i.e., in the pressing portion 10, the contact surface 840 presses the connection target 100 against the first conductor portion 20, thereby restricting movement of the connection target 100 in the negative direction of the Y axis.

### (2-4) Indicator

The indicator 5 is a member which is displayed to the outer side of the housing 3 to show that the tip portion 101 of the connection target 100 inserted through the insertion hole 6 reaches a prescribed location in the housing 3. The indicator 5 is made of, for example, a synthetic resin. The indicator 5 is configured to be pushed by a tip surface 102 of the tip portion 101 of the connection target 100 to linearly move from the first position to the second position.

The indicator 5 has a display mark 50. In the present example, the indicator 5 includes a body section 51 and a projection section 52. The body section 51 is rectangular when viewed in the Z-axis direction. The projection section 52 protrudes in the negative direction of the X axis from a positive-side end of the body section 51 in the Y-axis direction. The projection section 52 and the body section 51 are different from each other in appearance. The projection section 52 has, for example, a surface painted in a color different from a color of the body section 51. The projection section 52 is the display mark 50.

The indicator 5 is disposed in the second space S2 to be able to move linearly in both the positive direction of the X axis and the negative direction of the X axis. Two walls 320 and 310 surrounding the second space S2 and facing each other in the Y-axis direction, two walls surrounding the second space S2 and facing each other in the Z-axis direction, or all of these four walls are guide sections for guiding movement of the indicator 5 in the X-axis direction.

In the indicator 5, a negative-side end of the body section 51 in the Y-axis direction faces the insertion hole 6 in the X-axis direction. That is, the negative-side end of the body section 51 in the Y-axis direction is aligned with the insertion hole 6 in a straight line. The location of the projection section 52 in the Z-axis direction is the same as the location of the through hole 70 in the Z-axis direction.

In the present example, as illustrated in FIG. 1B, when the indicator 5 is in the second position, the projection section 52 is aligned with the through hole 70 on the negative side in the Y-axis direction. Thus, the projection section 52 is displayed through the through hole 70 to the outer side of the housing 3. As illustrated in FIG. 1A, when the indicator 5 is in the first position, the body section 51 is aligned with the through hole 70 on the negative side in the Y-axis direction. Thus, the projection section 52 is not displayed through the through hole 70 to the outer side of the housing 3.

### (2-5) Second Spring

The second spring 9 applies elastic force in a direction in which the indicator 5 in the second position moves in the first direction.

In the present example, the second spring 9 is a coil spring. The second spring 9 is disposed in the second space S2 such that the axis of the coil is parallel to the X axis.

The second spring 9 is disposed on the positive side of the body section 51 in the X-axis direction. That is, the second spring 9 is disposed on an opposite side of the indicator 5 from the insertion hole 6 in the insertion direction. The second spring 9 is, for example, disposed to face the insertion hole 6 in the X-axis direction.

The second spring 9 is disposed on the positive side of the body section 51 in the X-axis direction, for example, in a state where the second spring 9 is compressed in the X-axis direction. The second spring 9 pushes the indicator 5 by elastic force of the second spring 9 in the negative direction of the X axis. Thus, the indicator 5 is pushed against the wall 321 on the negative side of the second space S2 in the X-axis direction and is disposed in a negative-side area of the second space S2 in the X-axis direction (i.e., the first position). In a state where the indicator 5 is not pushed by the connection target 100, the indicator 5 is in the first position.

When pushed by the connection target 100, the indicator 5 is linearly moved against the elastic force of the second spring 9 to the positive side in the X-axis direction. The indicator 5 is pushed by the connection target 100 against walls 322 and 311 on the positive side of the second space S2 in the X-axis direction and is disposed in a positive-side area of the second space S2 in the X-axis direction, that is, in the second position.

When the indicator 5 is released from being pushed by the connection target 100, that is, the connection target 100 leaves the indicator 5, the indicator 5 is pushed by the elastic return force of the second spring 9 in the negative direction of the X axis and returns to the first position.

### (3) Connection Method of Connection Target

Next, a method for connecting the connection target 100 to the terminal device 1 will be described.

A worker inserts the tip portion 101 of the connection target 100 into the insertion hole 6 in the housing 3 in the positive orientation of the X-axis. The tip portion 101 which is inserted into the housing 3 is first introduced into a space between the lock section 82, i.e., the lock portion 4, and the first conductor portion 20 of the conductor 2. At this time, the tip surface 102 of the tip portion 101 pushes the lock section 82 to displace the tip edge 820 of the lock section 82 in a direction away from the first conductor portion 20, thereby elastically deforming the first spring 8 to reduce the space between the lock section 82 and the body 80. Thus, the tip portion 101 of the connection target 100 receives, from the tip edge 820 of the lock section 82, force in a direction in which the tip portion 101 is pressed against the first conductor portion 20, so that movement of the tip portion 101 in the negative direction of the Y axis is restricted. Moreover, at this time, the tip edge 820 of the lock section 82 bites in the tip portion 101, thereby restricting movement of the tip portion 101 in the negative direction of the X axis.

From this state, when the tip portion 101 of the connection target 100 is inserted further into the housing 3, the tip portion 101 is introduced into a space between the pressing section 84, i.e., the pressing portion 10, and the first conductor portion 20. At this time, the tip portion 101 presses the contact surface 840 of the pressing section 84 to elastically deform the pressing section 84 with respect to the body 80. Thus, the tip portion 101 of the connection target 100 receives, from the contact surface 840 of the pressing section 84, force in a direction in which the tip portion 101 is pressed against the first conductor portion 20, so that movement of the tip portion 101 in the negative direction of the Y axis is restricted.

From this state, the tip portion 101 of the connection target 100 is inserted further into the housing 3 and thereby the tip surface 102 of the tip portion 101 pushes the body section 51 of the indicator 5 in the first position to linearly move the indicator 5 from the first position to the second position. After the indicator 5 reaches the second position, further insertion of the connection target 100 into the housing 3, that is, movement in the positive direction of the X axis becomes no longer possible. That is, the tip portion 101 of the connection target 100 is insertable into the housing 3 to a prescribed location where the indicator 5 is in the second position.

As illustrated in FIG. 1B, in a state where the indicator 5 is in the second position, the projection section 52, i.e., the display mark 50 of the indicator 5 is aligned with the through hole 70 on the negative side in the Y-axis direction. Thus, the projection section 52, i.e., the display mark 50 is displayed through the through hole 70 to the outer side of the housing 3 and is visually perceivable from the outer side of the housing 3.

This allows a worker to confirm that the tip portion 101 of the connection target 100 is inserted to reach the prescribed location in the housing 3 by watching the through hole 70. In a state where the tip portion 101 of the connection target 100 is not inserted to reach the prescribed location in the housing 3, the body section 51 of the indicator 5 or both the body section 51 and the projection section 52, i.e., the display mark 50 are displayed through the through hole 70. This allows a worker to confirm an insufficient amount of insertion of the connection target 100 by watching the through hole 70.

Thus, in the case of the terminal device 1 of the present example, a worker can visually confirm, through the through hole 70, that the tip portion 101 of the connection target 100 inserted through the insertion hole 6 into the housing 3 reaches the prescribed location in the housing 3. Thus, in the terminal device 1 of the present example, it is possible to reduce the occurrence of a defective connection caused due to the connection target 100 which is not inserted to reach the prescribed location in the housing 3.

In addition, in the terminal device 1 of the present example, the indicator 5 is located on the positive side of the lock section 82, i.e., the lock portion 4 in the X-axis direction. Therefore, it is possible to reduce the disposition space of the indicator 5 in the housing 3 as compared to, for example, a case where the indicator 5 has a piece extending to the wall 30.

Moreover, in the terminal device 1 of the present example, the indicator 5 moves linearly, and therefore, it is possible to reduce a gap between the indicator 5 and a wall surrounding the indicator 5 as compared to the case of rotational movement. Also in this regard, it is possible to reduce the disposition space of the indicator 5 in the housing 3.

Thus, in the terminal device 1 of the present example, reducing the disposition space of the indicator 5 in the housing 3 enables the space in the housing 3 to be effectively applied to other applications, and the housing 3 can be downsized.

### (4) Variation

Next, variations of the terminal device 1 of the first example will be described. For the variation of the terminal device 1, components different from those in the terminal device 1 of the first example will be described in detail below.

### (4-1) First Variation

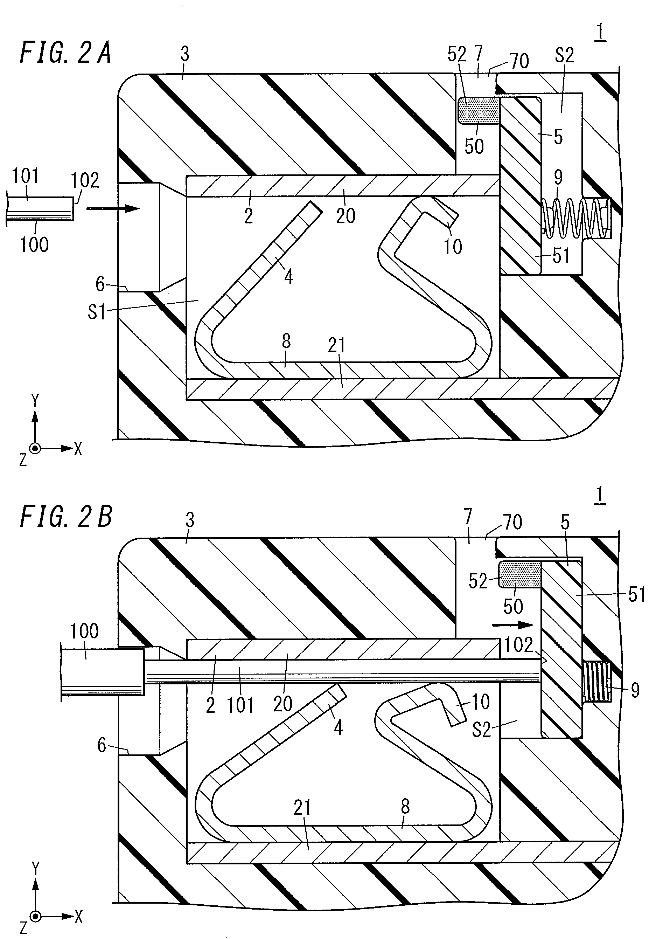

FIGS. 2A and 2B show a terminal device 1 of a first variation. The terminal device 1 of the first variation has a through hole 70 provided in a location in which on the positive side in the Y-axis direction, the through hole 70 is aligned with positive-side end of a first conductor portion 20 of a conductor 2 in the X-axis direction. The through hole 70 extends from an outer surface of a housing 3 to the first conductor portion 20, and the outer surface of the housing 3 is oriented in the positive direction of the Y-axis. The through hole 70 and a second space S2 are aligned with each other in the X-axis direction.

In the terminal device 1 of the first variation, as illustrated in FIG. 2A, when an indicator 5 is in a first position, a display mark 50, i.e., a projection section 52 is displayed through the through hole 70. As illustrated in FIG. 2B, when the indicator 5 is in a second position, the display mark 50 is not displayed through the through hole 70.

In the terminal device 1 of the first variation, when the indicator 5 is in the second position, the first conductor portion 20 of the conductor 2, i.e., a conductive portion whose electric potential is equal to an electric potential of the conductor 2 is exposed through the through hole 70. Thus, in the terminal device 1 of the first variation, an electrical current test can be performed by inserting a test rod of a measuring instrument for the electrical current test into the through hole 70 to bring the test rod into contact with the conductive portion, i.e., the first conductor portion 20 in the present embodiment, and thus, the through hole 70 can be used also as an opening for tests.

### (4-2) Second Variation

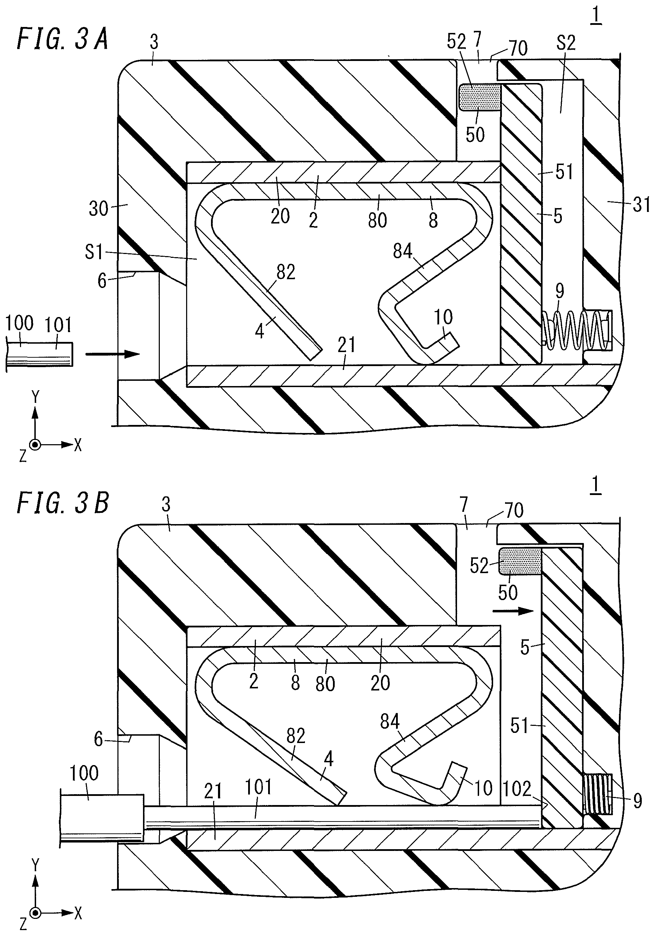

FIGS. 3A and 3B show a terminal device 1 of a second variation. The terminal device 1 of the second variation has a through hole 70 provided in a location in which on the positive side in the Y-axis direction, the through hole 70 is aligned with positive-side end of a first conductor portion 20 of a conductor 2 in the X-axis direction. The through hole 70 extends from an outer surface of a housing 3 to the first conductor portion 20, and the outer surface of the housing 3 is oriented in the positive direction of the Y-axis. The through hole 70 and a second space S2 are aligned with each other in the X-axis direction.

In the terminal device 1 of the second variation, an insertion hole 6 is directly in communication with a negative-side area of a first space S1 in the Y-axis direction. In the terminal device 1 of the second variation, in the positive direction of the Y axis, a second conductor portion 21 of the conductor 2, a lock portion 4 of a first spring 8, and the through hole 70 are aligned in this order. A tip portion 101 of a connection target 100 is pressed against the second conductor portion 21 of the conductor 2. The first spring 8 includes a lock section 82 and a pressing section 84 which are located on the negative side of a body 80 in the Y-axis direction. The first spring 8 applies elastic force in the negative direction of the Y axis to the tip portion 101 of the connection target 100. An indicator 5 has such a length that a negative-side end thereof in the Y-axis direction comes into contact with or comes close to the second conductor portion 21 of the conductor 2.

Similarly to the terminal device 1 of the first variation, in the terminal device 1 of the second variation, when the indicator 5 is in the first position as illustrated in FIG. 3A, a display mark 50 is displayed through the through hole 70, and when the indicator 5 is in the second position as illustrated in FIG. 3B, the display mark 50 is not displayed through the through hole 70. In the terminal device 1 of the second variation, when the indicator 5 is in the second position, the first conductor portion 20 of the conductor 2 is exposed through the through hole 70, and the through hole 70 may be used as an opening for testing a current-carrying state of a conductive portion (first conductor portion 20).

### (4-3) Third Variation

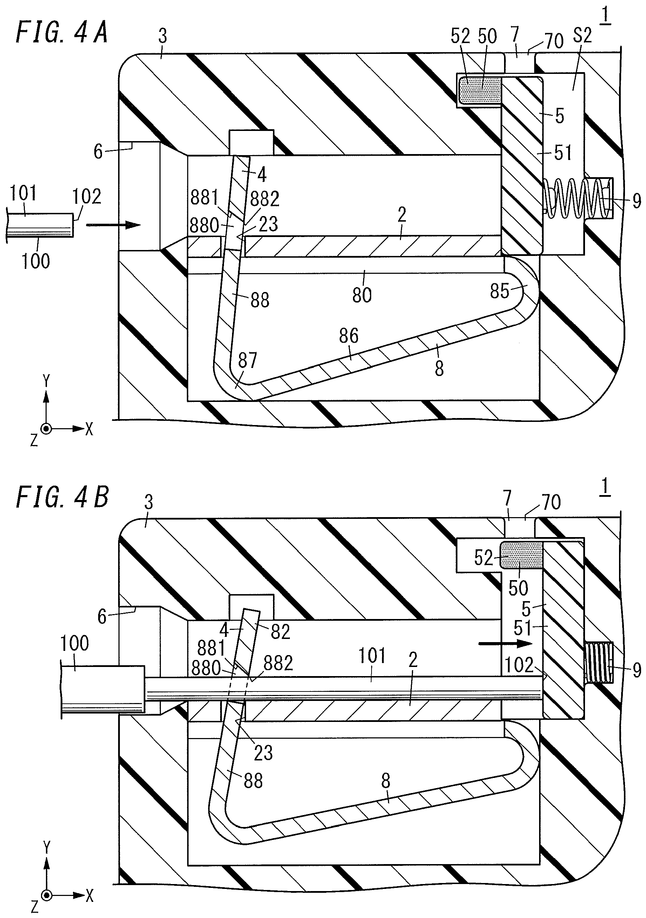

FIGS. 4A and 4B show a terminal device 1 of a third variation. The terminal device 1 of the third variation includes a conductor 2 having a plate-like shape. The conductor 2 has a thickness in a direction along the Y-axis direction. The conductor 2 has a hole 23 penetrating therethrough in the Y-axis direction.

A first spring 8 includes a body 80 having a flat-plate shape, a connection section 85 having an arc shape, a slope section 86 having a flat-plate shape, a connection section 87 having an arc shape, and a lock section 88 sequentially in this order. The body 80 is stacked on a surface of the conductor 2 which is oriented in the negative direction of the Y axis. The connection section 85 is connected to a positive-side end of the body 80 in the X-axis direction.

The lock section 88 intersects with the body 80 when viewed in the Z-axis direction. The lock section 88 and the body 80 are located at different locations in the Z-axis direction. The lock section 88 passes through the hole 23 in the conductor 2 and protrudes beyond the conductor 2 on the positive side in the Y-axis direction.

The lock section 88 has an insertion hole 880 penetrating therethrough in the X-axis direction. In a state where a tip portion 101 of a connection target 100 is not inserted in the insertion hole 880, part of the insertion hole 880 protrudes beyond the conductor 2 in the positive direction of the Y axis. In this state, a gap is formed between a surface 881 oriented in the negative direction of the Y axis and a surface of the conductor 2. The surface of the conductor 2 is oriented in the positive direction of the Y axis. The surface 881 is part of an inner surface of the insertion hole 880. The gap has a shorter length than the tip portion 101 of the connection target 100 in the Y-axis direction.

In the case of the terminal device 1 of the third variation, when a worker inserts the tip portion 101 of the connection target 100 through an insertion hole 6 of a housing 3 in the positive orientation of the X axis, the tip portion 101 is introduced into the insertion hole 880 in the lock section 88. At this time, the surface 881 of the lock section 88 is pressed by a tip surface 102 of the tip portion 101, the lock section 88 is displaced in the positive direction of the Y axis and elastically deforms to reduce the gap between the slope section 86 and the body 80. Thus, the tip portion 101 of the connection target 100 receives, from a negative-side tip edge 882 of the surface 881 of the lock section 88 in the Y-axis direction, force in a direction in which the tip portion 101 is pressed against the conductor 2, so that movement of the tip portion 101 in the negative direction of the X axis is restricted.

Similarly to the terminal device 1 of the first example, the terminal device 1 of the third variation also enables visual confirmation, through a through hole 70, that the tip portion 101 of the connection target 100 inserted through the insertion hole 6 into a housing 3 reaches a prescribed location in the housing 3. Thus, the terminal device 1 of the third variation enables the occurrence of defective connection to be reduced.

### (4-4) Others

In the terminal device 1 of the first example and the first to third variations thereof, the shape of the first spring 8 is not limited to the shape shown in the figures, but the first spring 8 may have other shapes. It is required only that the first spring 8 of the first example and the first and second variations includes the lock portion 4. The first spring 8 does not have to include the pressing portion 10. Moreover, in the terminal device 1 of the first example and the first and second variations, the pressing portion 10 may be a spring other than the first spring 8.

In the terminal device 1 of the first example and first to third variations thereof, the second spring 9 may be, but not limited to, the coil spring. Moreover, the terminal device 1 of the first example and first to third variations thereof may include a plurality of second springs 9.

In the terminal device 1 of the first example and the third variation, as long as the display section 7 is configured to display part of the indicator 5 to the outer side of the housing 3, the display section 7 may include a through hole 70 and a light-transmitting member closing the through hole 70.

The terminal device 1 of the first example and first to third variations thereof may include a release lever configured to release a lock realized by the lock portion 4. In this case, a worker operates the release lever so as to release the lock realized by the lock portion 4, which allows the connection target 100 to be pulled out of the terminal device 1. The terminal device 1 does not have to include the release lever, and in that case, the terminal device 1 may be configured such that the lock realized by the lock portion 4 is released by inserting a tool or the like into the first space S1.

In the terminal device 1 of the first example and the third variation, the indicator 5 does not have to include the projection section 52 but may include only the body section 51, and the body section 51 may also serve as the display mark 50.

In the terminal device 1 of the first example and the third variation, the indicator 5 may be made of conductive metal, and the indicator 5 in the second position may be used as a conductive portion whose electric potential is equal to an electric potential of the conductor 2. In this case, the through hole 70 may be used as an opening for testing a current-carrying state of the conductive portion.

Moreover, in the terminal device 1 of the first example and its first to third variations, the tip portion 101 of the connection target 100 in contact with the indicator 5 in the second position may be exposed through the through hole 70. In this case, the tip portion 101 may be used as a conductive portion whose electric potential is equal to an electric potential of the conductor 2, and the through hole 70 may be used as an opening for testing a current-carrying state of the conductive portion.

### (Second Example)

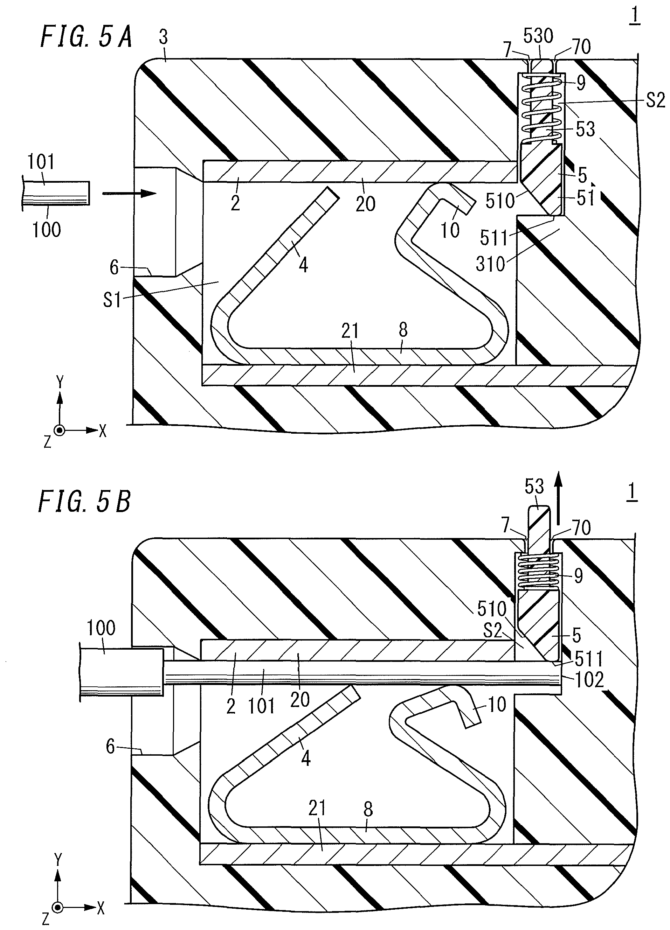

Next, a terminal device 1 of a second example illustrated in FIGS. 5A and 5B will be described. For the terminal device 1 of the second example, components different from those of the terminal device 1 of the first example will be described in detail below. Components similar to those of the terminal device 1 of the first example are denoted by the same reference signs in the figure, and detailed description thereof will be omitted.

### (1) Schema

In the terminal device 1 of the second example, an amount of projection of an indicator 5 from a through hole 70 is different between a case where the indicator 5 is in the first position and in a case where the indicator 5 is in the second position.

### (2) Details

In the terminal device 1 of the present example, the indicator 5 is accommodated in a second space S2 to be linearly movable in the Y-axis direction.

The indicator 5 includes a body section 51 and a projection 53. The body section 51 includes an inclined surface 510. The projection 53 protrudes from the body section 51 in the positive direction of the Y axis. The inclined surface 510 is inclined to be located farther away from the through hole 70 as the distance from an insertion hole 6 increases.

The body section 51 further includes a tip surface 511 which is flat. The tip surface 511 continues to the inclined surface 510 on the positive side in the X-axis direction. The tip surface 511 is parallel to the X axis. The projection 53 is shaped and dimensioned so as to be protrudable through the through hole 70. A second spring 9 is disposed in the second space S2 such that the projection 53 is located on an inner side of the second spring 9.

As illustrated in FIG. 5A, when the indicator 5 is in the first position, the tip surface 511 is in contact with a wall 310 on the negative side of the second space S2 in the Y-axis direction. The indicator 5 is pushed by the second spring 9 in the negative direction of the Y axis to reach the first position. When the indicator 5 is in the first position, the inclined surface 510 faces the insertion hole 6 in the X-axis direction. Moreover, at this time, a positive-side tip surface 530 of the projection 53 in the Y-axis direction is flush with an outer surface of a housing 3 around the through hole 70, that is, an outer surface oriented in the positive direction of the Y-axis.

When the inclined surface 510 is pushed by a tip surface 102 of a tip portion 101 of a connection target 100, the indicator 5 linearly moves in the positive direction of the Y axis to reach the second position. As illustrated in FIG. 5B, when the indicator 5 is in the second position, the tip surface 511 of the body section 51 of the indicator 5 is in contact with a surface of the tip portion 101, and the surface of the tip portion 101 is oriented in the positive direction of the Y axis. When the indicator 5 is in the second position, a positive-side end of the projection 53 in the Y-axis direction projects through the through hole 70 on the positive side in the Y-axis direction.

In the terminal device 1 of the second example, the tip portion 101 of the connection target 100 inserted through the insertion hole 6 into the housing 3 is guided to a prescribed location in the housing 3, that is, a location where the tip portion 101 is in contact with the tip surface 511 of the indicator 5, so that the projection 53 of the indicator 5 protrudes through the through hole 70. This allows a worker to confirm that the tip portion 101 of the connection target 100 is inserted to reach the prescribed location in the housing 3 by watching the through hole 70. Thus, in the terminal device 1 of the second example, it is possible to reduce the occurrence of a defective connection caused due to the connection target 100 which is not inserted to reach the prescribed location in the housing 3.

In addition, in the terminal device 1 of the present example, the indicator 5 linearly moves in only the Y-axis direction, and therefore, it is possible to effectively reduce a disposition space of the indicator 5 in the housing 3 in the X-axis direction.

The projection 53 of the indicator 5 which protrudes through the through hole 70 may be used as an indicator or the like during construction. For example, a door of a case accommodating the terminal device 1 may have a structure which allows the door to be closed when the door hits the projection 53 protruding through the through hole 70. In this case, the door of the case is closed only when the connection target 100 is appropriately connected.

### (3) Variation

Next, variations of the terminal device 1 of the second example will be described. For the variations of the terminal device 1, components different from those in the terminal device 1 of the second example will be described in detail below.

### (3-1) First Variation

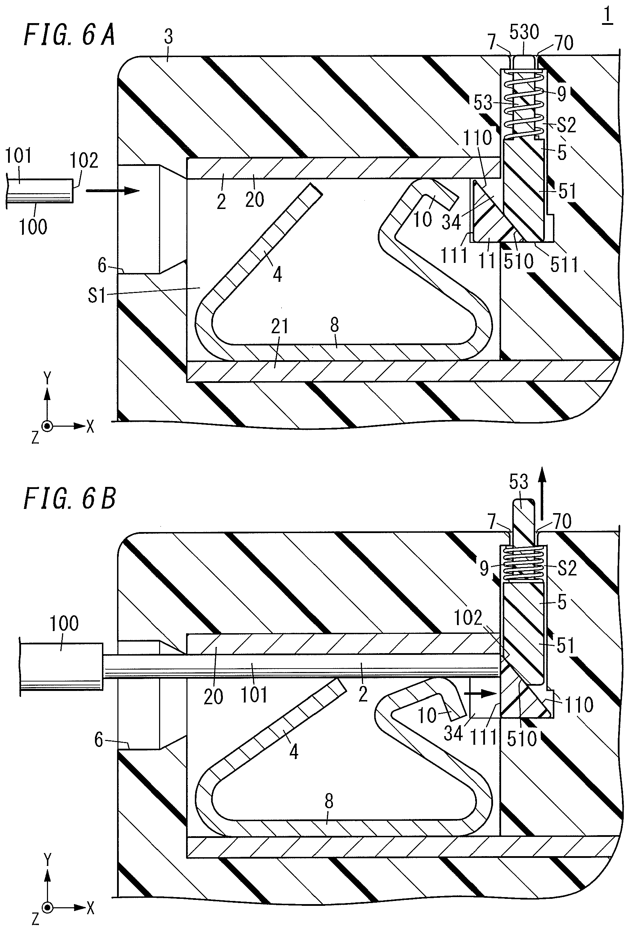

FIGS. 6A and 6B show a terminal device 1 of a first variation. The terminal device 1 of the first variation further includes an intermediate portion 11 located between a pressing portion 10 and an indicator 5 in the positive direction of the X axis, that is, the insertion direction.

The intermediate portion 11 includes a push surface 110 which is pushed against an inclined surface 510 of the indicator 5. The length of the push surface 110 in the Y-axis direction is greater than that of a tip surface 102 of a tip portion 101 of a connection target 100 in the Y-axis direction. The push surface 110 is inclined to be located farther away from a through hole 70 as the distance from an insertion hole 6 increases. The angle of inclination of the push surface 110 to the X axis is equal to the angle of inclination of the inclined surface 510 to the X axis. The length of the push surface 110 is greater than that of the inclined surface 510 in the Y-axis direction. The intermediate portion 11 has a surface 111 being oriented in the negative direction of the X axis and being parallel to the Y axis.

A housing 3 has support grooves 34 in which both ends of the intermediate portion 11 in the Z-axis direction are fit. The support groove 34 is provided to each of two walls of the housing 3 which face each other in the Z-axis direction. The pair of support grooves 34 restricts movement of the intermediate portion 11 in the Y-axis direction and the Z-axis direction. Thus, the intermediate portion 11 is movable in only positive and negative directions of the X axis.

In the terminal device 1 of the first variation, when the tip portion 101 of the connection target 100 is inserted through the insertion hole 6 into the housing 3, the tip surface 102 of the tip portion 101 comes into contact with the surface 111 of the intermediate portion 11. The push surface 110 of the intermediate portion 11 pushes the inclined surface 510 of the indicator 5 in the first position in the positive direction of the X axis. Thus, the indicator 5 is pushed by the intermediate portion 11 in the positive direction of the Y axis, so that the indicator 5 linearly moves to reach the second position, and thereby, a projection 53 of the indicator 5 protrudes through the through hole 70.

In the terminal device 1 of the first variation, the tip surface 102 of the connection target 100 comes into contact with the surface 111 which is part of the intermediate portion 11 and which is parallel to the Y axis. Therefore, the tip portion 101 hardly deforms in the Y-axis direction and easily pushes the indicator 5.

Moreover, in the terminal device 1 of the first variation, a second space S2 may be disposed on the negative side in the Y-axis direction as compared to that in the terminal device 1 of the second example. Thus, it is possible to reduce the length of the housing 3 in the Y-axis direction.

Moreover, in the terminal device 1 of the first variation, the push surface 110 which is longer than the tip portion 101 of the connection target 100 in the Y-axis direction pushes the inclined surface 510. Thus, it is possible to further increase the amount of projection of the indicator 5 from the through hole 70 when the indicator 5 is in the second position.

### (3-2) Second Variation

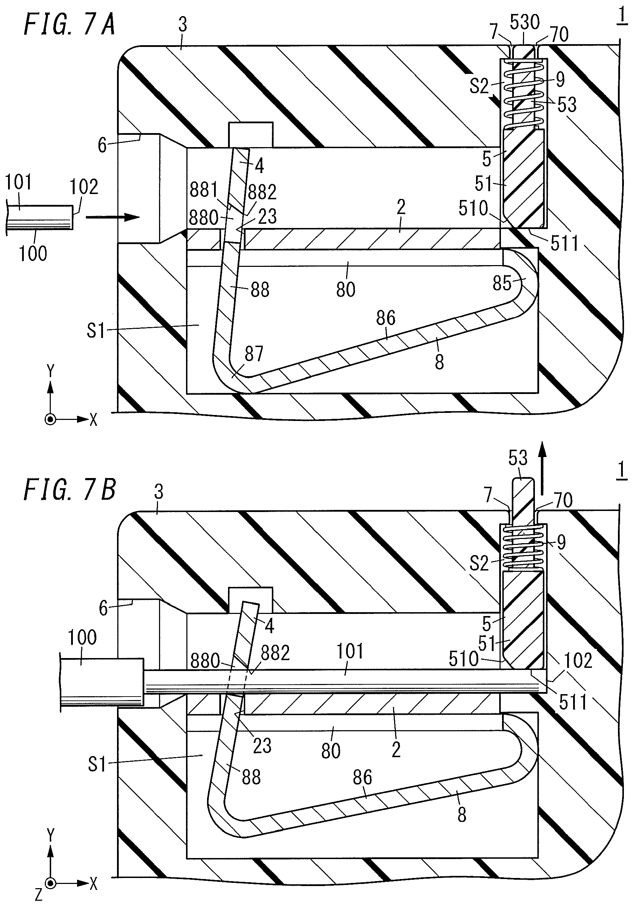

FIGS. 7A and 7B show a terminal device 1 of a second variation. The terminal device 1 of the second variation has a first spring 8 whose shape is different from the shape of the first spring 8 of the terminal device 1 in the second example. The first spring 8, a conductor 2, and a first space S1 of the terminal device 1 of the second variation have similar structures to the structures of the first spring 8, the conductor 2, and the first space S1 of the terminal device 1 of the third variation in the first example.

Also in the case of the terminal device 1 of the second variation, a tip portion 101 of a connection target 100 inserted through an insertion hole 6 into a housing 3 is guided to reach a prescribed location in the housing 3, so that a projection 53 of an indicator 5 protrudes through a through hole 70 and becomes visually perceivable by a worker. Thus, in the terminal device 1 of the second variation, it is possible to reduce the occurrence of a defective connection caused due to the connection target 100 which is not inserted to reach the prescribed location in the housing 3.

### (3-3) Others

In the terminal device 1 of the second example and the first and second variations of the second example, the shape of the first spring 8 may be other shapes. It is required only that the first spring 8 includes the lock portion 4. The first spring 8 does not have to include the pressing portion 10. Moreover, in the terminal device 1 of the second example and the first variation of the second example, the pressing portion 10 may be a spring other than the first spring 8.

In the terminal device 1 of the second example and the first and second variations of the second example, the second spring 9 may be, but not limited to, the coil spring. Moreover, the terminal device 1 of the second example and the first and second variations of the second example may include a plurality of second springs 9.

The terminal device 1 of the second example and the first and second variations of the second example may include a release lever configured to release a lock realized by the lock portion 4.

Also in the terminal device 1 of the first and second variations of the second example, the projection 53 configured to protrude through the through hole 70 when being in the second position may be used as, for example, an indicator during construction.

The terminal device 1 of the second example and the first and second variations of the second example may be configured such that when the indicator 5 is in the first position, the projection 53 protrudes through the through hole 70, and when the indicator 5 is in the second position, the projection 53 does not protrude through the through hole 70.

Alternatively, in the terminal device 1 of the second example and the first and second variations of the second example, the projection 53 may protrude through the through hole 70 both in a case where the indicator 5 is in the first position and in a case where the indicator 5 is in the second position, and the length of protrusion may be different between the case where the indicator 5 is in the first position and the case where the indicator 5 is in the second position.

### (Third Example)

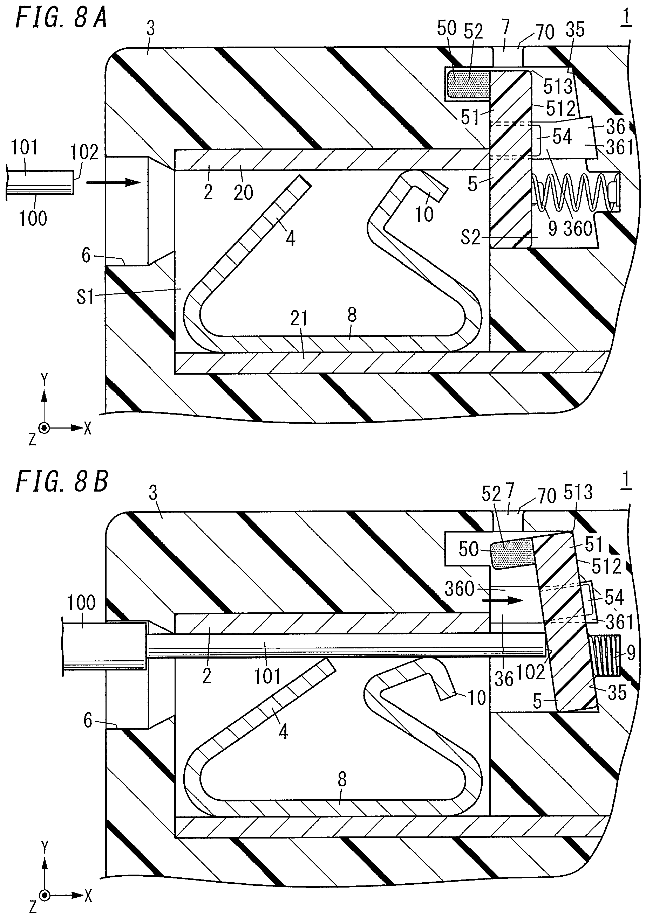

Next, a terminal device 1 of a third example illustrated in FIGS. 8A and 8B will be described. For the terminal device 1 of the third example, components different from those of the terminal device 1 of the first example will be described in detail below. Components similar to those of the terminal device 1 of the first example are denoted by the same reference signs in the figure, and detailed description thereof will be omitted.

### (1) Schema

In the terminal device 1 of the third example, an indicator 5 is pushed by a connection target 100 to move from the first position to the second position in a mode including both linear movement and rotational movement.

### (2) Details

In the terminal device 1 of the present example, a housing 3 includes an inclined surface 35 with which the indicator 5 in the second position is in contact. The inclined surface 35 is a surface facing a second space S2 on the positive side in the X-axis direction. The inclined surface 35 is inclined to be located farther away from an insertion hole 6 as the distance from a through hole 70 increases.

The indicator 5 includes projections 54 protruding on both sides from a body section 51 in the Z-axis direction. Each projection 54 has a rectangular shape when viewed in the Z-axis direction. The housing 3 has two walls facing each other in the Z direction, and each wall has a guide groove 36 in which a corresponding one of the projections 54 is fit.

The guide groove 36 includes a linear guide section 360 and a rotation guide section 361 which continues to the linear guide section 360 on the positive side in the X-axis direction. The length of the linear guide section 360 in the Y-axis direction is substantially the same as the length of the projection 54 in the Y-axis direction. The rotation guide section 361 is wider than the linear guide section 360 in the Y-axis direction.

The indicator 5 linearly moves along the linear guide sections 360 and rotationally moves at the rotation guide sections 361.

In the terminal device 1 of the present example, a tip surface 102 of a tip portion 101 of the connection target 100 pushes the indicator 5 in the first position in the positive direction of the X axis to linearly move the indicator 5 in the first position in the positive direction of the X axis. The indicator 5 linearly moves until an edge 513 which is part of a surface 512 of the body section 51 and which is located on the positive side in the Y-axis direction comes into contact with the inclined surface 35. The surface 512 is oriented in the positive direction of the X axis. Thereafter, the indicator 5 rotationally moves, with the edge 513 as the center, to a location where the surface 512 of the body section 51 comes into contact with the inclined surface 35, that is, to reach the second position.

In the terminal device 1 of the present example, when the indicator 5 moves from the first position to the second position, the indicator 5 is guided by the linear guide sections 360 of the pair of guide grooves 36, in which the projections 54 of the indicator 5 are fit and which are formed in the housing 3, so that the indicator 5 is linearly moved to reach a position immediately before the second position. Thus, in the terminal device 1 of the present example, inclination of the indicator 5 to the tip surface 102 of the connection target 100 is reduced, and the indicator 5 is easily pushed by the tip surface 102 of the connection target 100 although the movement mode from the first position to the second position includes rotational movement.

Also in the case of the terminal device 1 of the above-described third example, a tip portion 101 of a connection target 100 inserted through an insertion hole 6 into a housing 3 is guided to reach a prescribed location in the housing 3, and thereby, a projection section 52, that is, the display mark 50, is displayed through the through hole 70 and is visually perceivable by a worker. Thus, in the terminal device 1 of the third example, it is possible to reduce the occurrence of a defective connection caused due to the connection target 100 which is not inserted to reach the prescribed location in the housing 3.

### (3) Variation

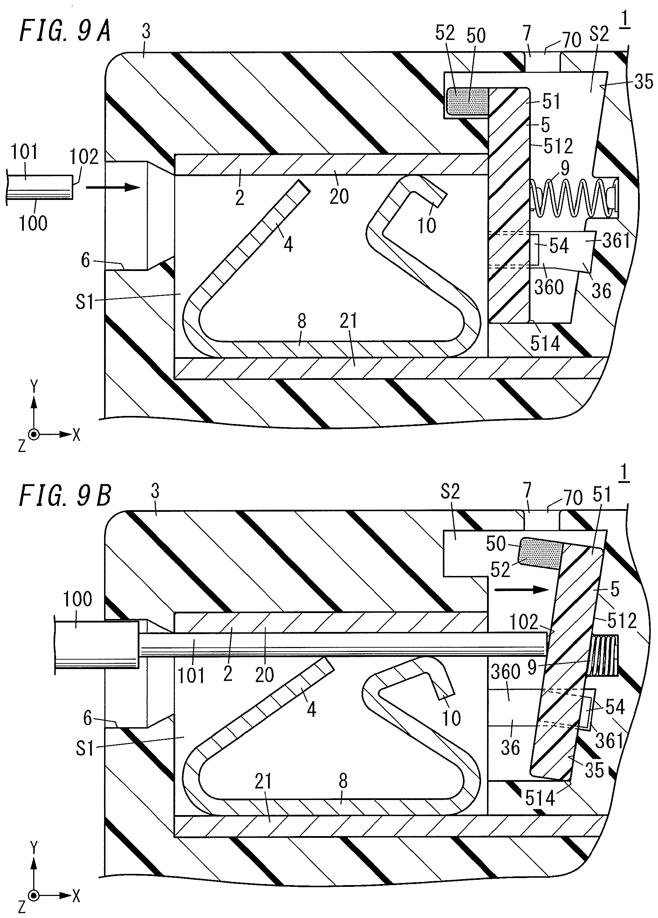

Next, variations of the terminal device 1 of the third example illustrated in FIGS. 9A and 9B will be described. For the variations of the terminal device 1, components different from those in the terminal device 1 of the third example will be described in detail below.

### (3-1) First Variation

In a terminal device 1 of a first variation, an inclined surface 35 is inclined to be located farther away from an insertion hole 6 as the distance from a through hole 70 decreases.

In the terminal device 1 of the first variation, a tip surface 102 of a tip portion 101 of a connection target 100 pushes an indicator 5 in the first position in the positive direction of the X axis to linearly move the indicator 5 in the first position in the positive direction of the X axis. The indicator 5 linearly moves until an edge 514 which is part of a surface 512 of a body section 51 and which is located on the negative side in the Y-axis direction comes into contact with the inclined surface 35. The surface 512 is oriented in the positive direction of the X axis. Thereafter, the indicator 5 rotationally moves, with the edge 514 as the center, to a location where the surface 512 of the body section 51 comes into contact with the inclined surface 35, that is, to reach the second position.

Also in the terminal device 1 of the first variation, linear guide sections 360 of a pair of guide grooves 36 in a housing 3 reduces inclination of the indicator 5, so that the indicator 5 is easily pushed by the tip surface 102 of the connection target 100.

Also in the case of the terminal device 1 of the above-described first variation, the tip portion 101 of the connection target 100 inserted through the insertion hole 6 into the housing 3 is guided to reach a prescribed location in the housing 3, and thereby, a projection section 52, that is, a display mark 50, is displayed through the through hole 70 and is visually perceivable by a worker. Thus, in the terminal device 1 of the first variation, it is possible to reduce the occurrence of a defective connection caused due to the connection target 100 which is not inserted to reach the prescribed location in the housing 3.

### (3-2) Others

In the terminal device 1 of the third example and the first variation of the third example, the shape of the first spring 8 may be other shapes. It is required only that the first spring 8 includes the lock portion 4. The first spring 8 does not have to include the pressing portion 10. Moreover, the terminal device 1 of the third example and the first variation of the third example, the pressing portion 10 may be a spring other than the first spring 8.

In the terminal device 1 of the third example and the first variation of the third example, the second spring 9 may be, but is not limited to, the coil spring. Moreover, the terminal device 1 of the third example and the first variation of the third example may include a plurality of second springs 9.

In the terminal device 1 of the third example and the first variation of the third example, the display section 7 may include the through hole 70 and a light-transmitting member closing the through hole 70.

The terminal device 1 of the third example and the first variation of the third example may include a release lever configured to release a lock realized by the lock portion 4.

In the terminal device 1 of the third example and the first variation of the third example, a structure configured to rotationally move the indicator 5 in a position immediately before the second position may be a configuration other than the inclined surface 35.

In the terminal device 1 of the third example and the first variation of the third example, the indicator 5 may be made of conductive metal, and the indicator 5 in the second position may be used as a conductive portion whose electric potential is equal to an electric potential of the conductor 2. In this case, the through hole 70 may be used as an opening for testing a current-carrying state of the conductive portion.

### [Power Converter]

Next, a power converter 200 will be described. The power converter 200 includes: the terminal device 1 according to any one of the first to third examples and variations thereof; and a power conversion circuit 12 electrically connected to the conductor 2 of the terminal device 1.

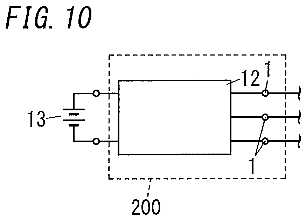

FIG. 10 shows an example of use of the power converter 200. In the power converter 200, for example, the power conversion circuit 12 is electrically connected to a photovoltaic cell 13.

The power converter 200 includes a plurality of terminal devices 1 connected to the power conversion circuit 12. The plurality of terminal devices 1 may be terminal devices having the same structure or terminal devices having different structures in combination. That is, the plurality of terminal devices 1 are terminal devices 1 of one type of any one of the first to third examples and variations thereof or are terminal devices 1 of combination of types of the first to third examples and variation thereof.

The power conversion circuit 12 is, for example, an inverter circuit configured to convert direct-current power into alternating-current power. The power conversion circuit 12 may be a circuit configured to convert direct-current power into step-up or step-down direct-current power.

The power converter 200 allows a worker to visually confirm that each terminal device 1 is appropriately connected to the connection target 100, so that it is possible to appropriately supply electricity generated by the photovoltaic cell 13 to electric appliances indoors or the like.

### [Summary]

As the terminal device 1 of the first to third examples and variations thereof described above, a terminal device (1) of a first aspect includes the following configurations.

The terminal device (1) of the first aspect includes a housing (3), a lock portion (4), and an indicator (5). The housing (3) accommodates a conductor (2). The housing (3) has an insertion hole (6) through which a connection target (100) is to be inserted. The lock portion (4) is configured to hold the connection target (100) inserted through the insertion hole (6) into the housing (3) between the lock portion (4) and the conductor (2) to restrict movement of the connection target (100) in a direction opposite to an insertion direction of the connection target (100). The indicator (5) is accommodated in the housing (3) and is located on an opposite side of the lock portion (4) from the insertion hole (6) in the insertion direction. The indicator (5) is configured to be pushed by the connection target (100) to move in a mode including linear movement from a first position to a second position. The housing (3) further includes a display section (7). Part of the indicator (5) is displayable through the display section (7) to an outer side of the housing (3). A display mode of the display section (7) is different between a case where the indicator (5) is in the first position and a case where the indicator (5) is in the second position.

With this configuration, in the terminal device (1) of the first aspect, when the connection target (100) is inserted through the insertion hole (6) into the housing (3), the connection target (100) pushes the indicator (5) so that the indicator (5) moves to reach the second position. Thus, in the terminal device (1) of the first aspect, the display mode of the display section (7) configured to display part of the indicator (5) can be changed.

Thus, in the case of the terminal device (1) of the first aspect, a worker watches the display mode of the display section (7) to check whether or not the connection target (100) is inserted to reach a prescribed location in the housing (3), that is, a location where the connection target (100) comes into contact with the indicator (5) in the second position.

Moreover, as the terminal device 1 of the first and third examples and the variations thereof, a terminal device (1) of a second aspect includes the following configuration in addition to the configuration of the terminal device (1) of the first aspect.

In the terminal device (1) of the second aspect, the display section (7) has a through hole (70) penetrating through the housing (3). The indicator (5) includes a display mark (50). When the indicator (5) is in one of the first position and the second position, the display mark (50) is displayed through the through hole (70) to the outer side of the housing (3). When the indicator (5) is in the other of the first position and the second position, the display mark (50) is not displayed through the through hole (70) to the outer side of the housing (3).

With this configuration, in the terminal device (1) of the second aspect, a worker can confirm a connection state of the connection target (100) by checking the display mark (50) of the indicator (5) through the through hole (70). In the terminal device (1) of the second aspect, part of the indicator (5) does not protrude to the outer side of the housing (3), and therefore, the part is not a hindrance.

Moreover, as the terminal device (1) of the second example and the variations thereof, a terminal device (1) of a third aspect includes the following configuration in addition to the configuration of the terminal device (1) of the first aspect.

In the terminal device (1) of the third aspect, the display section (7) is a through hole (70) penetrating through the housing (3). An amount of projection of the indicator (5) from the through hole (70) is different between a case where the indicator (5) is in the first position and in a case where the indicator (5) is in the second position.

With this configuration, in the case of the terminal device (1) of the third aspect, a worker can confirm a change of the display mode of the display section (7) by watching the through hole (70) not only in a direction in which the through hole (70) opens but also in other directions.

Moreover, as the terminal device (1) of the variations of the first and third examples, a terminal device (1) of a fourth aspect includes the following configuration in addition to the configuration of the terminal device (1) of the first aspect.

That is, in the terminal device (1) of the fourth aspect, the display section (7) is a through hole (70) penetrating through the housing (3). When the indicator (5) is in the second position, a conductive portion whose electric potential is equal to an electric potential of the conductor (2), i.e., the conductor (2), the indicator (5) which is electrically conductive, or a tip portion (101) of the connection target (100) is exposed through the through hole (70).

With this configuration, in the terminal device (1) of the fourth aspect, an electrical current test can be performed by inserting a test rod of a measuring instrument for the electrical current test into the through hole (70) to bring the test rod into contact with the conductive portion, and thus, the through hole (70) can be used also as an opening for tests.

Moreover, as the terminal device (1) of any one of the first to third examples and the variations thereof, a terminal device (1) of a fifth aspect includes the following configuration in addition to the configuration of the terminal device (1) of any one of the first to fourth aspects.

The terminal device (1) of the fifth aspect further includes a spring, i.e., the second spring (9) configured to apply elastic force to the indicator (5) in the second position in a direction in which the indicator (5) moves to the first position.

With this configuration, in the terminal device (1) of the fifth aspect, it is possible to prevent the indicator (5) from being located in the second position when the connection target (100) is not inserted to reach the prescribed location in the housing (3).

Moreover, as the terminal device (1) of the first and third examples and the variations thereof, a terminal device (1) of a sixth aspect includes the following configuration in addition to the configuration of the terminal device (1) of any one of the first, second, and fourth aspects.

The terminal device (1) of the sixth aspect further includes a spring, i.e., a second spring (9) located on an opposite side of the indicator (5) from the insertion hole (6) in the insertion direction.

With this configuration, in the terminal device (1) of the sixth aspect, when the connection target (100) pushes the indicator (5) in the first position to the second position, it is required only that the indicator (5) is pushed against elastic force of the spring (9) acting in a direction opposite to a direction in which the indicator (5) is pushed. Thus, in the terminal device (1) of the sixth aspect, a pushing operation of the indicator (5) is easily performed.

Moreover, as the terminal device (1) of the first example, the first and second variations of the first example, the second example, the first variation of the second example, the third example, and the first variation of the third example, a terminal device (1) of a seventh aspect includes the following configuration in addition to the configuration of the terminal device (1) of any one of the first to sixth aspects.

The terminal device (1) of the seventh aspect further includes a pressing portion (10) located between the lock portion (4) and the indicator (5) in the insertion direction and configured to press the connection target (100) against the conductor (2) to restrict movement of the connection target (100) in a direction traverse to the insertion direction.

With this configuration, in the terminal device (1) of the seventh aspect, the pressing portion (10) reduces movement of the tip portion (101) of the connection target (100) guided to beyond the lock portion (4) in a direction traverse to the insertion direction, that is, deformation of the tip portion (101). Thus, the terminal device (1) of the seventh aspect enables to reduce cases where the tip portion (101) of the connection target (100) can no longer appropriately push the indicator (5).

Moreover, as the first example, the first variation of the first example, the second example, the first variation of the second example, the third example, and the first variation of the third example, a terminal device (1) of an eighth aspect includes the following configuration in addition to the configuration of the terminal device (1) of any one of the first to seventh aspects.

In the terminal device (1) of the eighth aspect, the display section (7) is a through hole (70) which is open in a first direction traverse to the insertion direction, that is, the positive direction of the Y axis. In the first direction, the lock portion (4), the conductor (2), and the through hole (70) are located in this order.

With this configuration, in the terminal device (1) of the eighth aspect, the distance from the connection target (100) disposed between the lock portion (4) and the conductor (2) to the through hole (70) can be reduced. Thus, in the terminal device (1) of the eighth aspect, it is possible to reduce the length in the first direction of the indicator (5) including part to be pushed by the connection target (100) and part to be displayed through the through hole (70). Thus, in the terminal device (1) of the eighth aspect, it is possible to reduce a disposition space of the indicator (5) in the housing (3), and the space in the housing (3) can be effectively used.

Moreover, as the second variation of the first example, a terminal device (1) of a ninth aspect includes the following configuration in addition to the configuration of the terminal device (1) of any one of the first to seventh aspects.

In the terminal device (1) of the ninth aspect, the display section (7) is a through hole (70) which is open in a first direction traverse to the insertion direction, that is, the positive direction of the Y axis. In the first direction, the conductor (2), i.e., second conductor portion (21), the lock portion (4), and the through hole (70) are located in this order.

With this configuration, in the terminal device (1) of the ninth aspect, the distance from the connection target (100) disposed between the conductor (2) and the lock portion (4) to the through hole (70) can be increased. Thus, in the terminal device (1) of the ninth aspect, the insertion hole (6) through which the connection target (100) is to be inserted can be disposed at a location away from the through hole (70).

Moreover, as the power converter 200 of the example, a power converter (200) of a tenth aspect includes the terminal device (1) of any one of the first to ninth aspects, and a power conversion circuit (12) electrically connected to the conductor (2) of the terminal device (1).

With this configuration, the power converter (200) of the tenth aspect allows a worker to easily electrically connect the connection target (100) to the power conversion circuit (12) by using the terminal device (1) and to visually check a connection state, and therefore, it is possible to reduce the occurrence of connection defect.

### Reference Signs List

- 1: Terminal Device
- 2: Conductor
- 3: Housing
- 4: Lock Portion
- 5: Indicator
- 50: Display Mark
- 6: Insertion Hole
- 7: Display Section
- 70: Through Hole
- 9: Second Spring
- 10: Pressing Portion
- 12: Power Conversion Circuit
- 100: Connection Target
- 200: Power Converter

## Claims

1. A terminal device (1), comprising:
a housing (3) accommodating a conductor (2) and having an insertion hole (6) through which a connection target (100) may be inserted;
a lock portion (4) configured to hold the connection target (100) inserted through the insertion hole (6) into the housing (3) between the lock portion (4) and the conductor (2) to restrict movement of the connection target (100) in a direction opposite to an insertion direction of the connection target (100); and
an indicator (5) accommodated in the housing (3), located on an opposite side of the lock portion (4) from the insertion hole (6) in the insertion direction, and configured to be pushed by the connection target (100) to move in a mode including linear movement from a first position to a second position,
the housing (3) further including a display section (7),
part of the indicator (5) being displayable through the display section (7) to an outer side of the housing (3),
a display mode of the display section (7) being different between a case where the indicator (5) is in the first position and a case where the indicator (5) is in the second position,
wherein
the display section (7) is a through hole (70) penetrating through the housing (3),
**characterized in that**
a conductive portion (20) of the conductor (2) is exposed through the through hole (70) when the indicator (5) is in the second position.

2. The terminal device (1) according to claim 1, wherein
the indicator (5) includes a display mark (50),
when the indicator (5) is in the first position, the display mark (50) is displayed through the through hole (70) to the outer side of the housing (3), and when the indicator (5) is in the second position, the display mark (50) is not displayed through the through hole (70) to the outer side of the housing (3).

3. The terminal device (1) according to claim 1 or 2, further comprising a spring (9) configured to apply elastic force to the indicator (5) in the second position in a direction in which the indicator (5) moves to the first position.

4. The terminal device (1) according to claim 1 or 2 further comprising a spring (9) located on an opposite side of the indicator (5) from the insertion hole (6) in the insertion direction

5. The terminal device (1) according to any one of claims 1 to 4, further comprising a pressing portion (10) located between the lock portion (4) and the indicator (5) in the insertion direction and configured to press the connection target (100) against the conductor (2) to restrict movement of the connection target (100) in a direction traverse to the insertion direction

6. The terminal device (1) according to any one of claims 1 to 5, wherein
the display section (7) is a through hole (70) which is open in a first direction traverse to the insertion direction, and
in the first direction, the lock portion (4), the conductor (2), and the through hole (70) are located in this order.

7. The terminal device (1) according to any one of claims 1 to 5, wherein
the display section (7) is a through hole (70) which is open in a first direction traverse to the insertion direction, and
in the first direction, the conductor (2), the lock portion (4), and the through hole (70) are located in this order.

8. A power converter (200), comprising:
the terminal device (1) of any one of claims 1 to 7; and
a power conversion circuit (12) electrically connected to the conductor (2) of the terminal device (1).

## Patentansprüche

1. Endgerätevorrichtung (1), aufweisend:
ein Gehäuse (3), in dem ein Leiter (2) untergebracht ist und das ein Einführungsloch (6) aufweist, durch das ein Verbindungsziel (100) eingesetzt werden kann;
einen Verriegelungsabschnitt (4), der konfiguriert ist, um das Verbindungsziel (100), das durch das Einführungsloch (6) in das Gehäuse (3) eingesetzt ist, zwischen dem Verriegelungsabschnitt (4) und dem Leiter (2) festzuhalten, um eine Bewegung des Verbindungsziels (100) in einer Richtung entgegengesetzt zu der Einsetzrichtung des Verbindungsziels (100) zu begrenzen; und
einen Indikator (5), der angeordnet auf einer dem Einführungsloch (6) in der Einsetzrichtung gegenüberliegenden Seite des Verriegelungsabschnitts (4) in dem Gehäuse (3) untergebracht ist und konfiguriert ist, um von dem Verbindungsziel (100) gedrückt zu werden, um sich in einem Modus zu bewegen, der eine lineare Bewegung von einer ersten Position zu einer zweiten Position umfasst,
wobei das Gehäuse (3) ferner einen Anzeigebereich (7) aufweist,
ein Teil des Indikators (5) durch den Anzeigebereich (7) zu einer Außenseite des Gehäuses (3) anzeigbar ist,
ein Anzeigemodus des Anzeigeabschnitts (7) zwischen einem Fall, in dem sich der Indikator (5) in der ersten Position befindet, und einem Fall, in dem sich der Indikator (5) in der zweiten Position befindet, unterschiedlich ist,
wobei
der Anzeigeabschnitt (7) ein Durchgangsloch (70) ist, das das Gehäuse (3) durchdringt,
**dadurch gekennzeichnet, dass**
ein leitender Abschnitt (20) des Leiters (2) durch das Durchgangsloch (70) freigelegt ist, wenn sich der Indikator (5) in der zweiten Position befindet.

2. Endgerätevorrichtung (1) nach Anspruch 1, wobei
der Indikator (5) eine Anzeigemarkierung (50) aufweist,
wenn sich der Indikator (5) in der ersten Position befindet, die Anzeigemarkierung (50) durch das Durchgangsloch (70) zur Außenseite des Gehäuses (3) hin angezeigt wird, und wenn sich der Indikator (5) in der zweiten Position befindet, die Anzeigemarkierung (50) nicht durch das Durchgangsloch (70) zur Außenseite des Gehäuses (3) hin angezeigt wird.

3. Endgerätevorrichtung (1) nach Anspruch 1 oder 2, ferner eine Feder (9) aufweisend, die konfiguriert ist, um in der zweiten Position eine elastische Kraft auf den Indikator (5) in einer Richtung auszuüben, in der sich der Indikator (5) in die erste Position bewegt.

4. Endgerätevorrichtung (1) nach Anspruch 1 oder 2 ferner eine Feder (9) aufweisend, die sich auf einer dem Einführungsloch (6) in der Einsetzrichtung entgegengesetzten Seite des Indikators (5) befindet.

5. Endgerätevorrichtung (1) nach einem der Ansprüche 1 bis 4 ferner einen Druckabschnitt (10) aufweisend, der sich zwischen dem Verriegelungsabschnitt (4) und dem Indikator (5) in der Einsetzrichtung befindet und konfiguriert ist, um das Verbindungsziel (100) gegen den Leiter (2) zu drücken, um die Bewegung des Verbindungsziels (100) in einer Richtung quer zur Einsetzrichtung zu begrenzen.

6. Endgerätevorrichtung (1) nach einem der Ansprüche 1 bis 5, wobei der Anzeigeabschnitt (7) ein Durchgangsloch (70) ist, das in einer ersten Richtung quer zur Einsetzrichtung offen ist, und
in der ersten Richtung der Verriegelungsabschnitt (4), der Leiter (2) und das Durchgangsloch (70) in dieser Reihenfolge angeordnet sind.

7. Endgerätevorrichtung (1) nach einem der Ansprüche 1 bis 5, wobei
der Anzeigeabschnitt (7) ein Durchgangsloch (70) ist, das in einer ersten Richtung quer zur Einsetzrichtung offen ist, und
in der ersten Richtung der Leiter (2), der Verriegelungsabschnitt (4) und das Durchgangsloch (70) in dieser Reihenfolge angeordnet sind.

8. Stromwandler (200), aufweisend:
die Endgerätevorrichtung (1) nach einem der Ansprüche 1 bis 7; und
eine Stromwandlungsschaltung (12), die elektrisch mit dem Leiter (2) der Endgerätevorrichtung (1) verbunden ist.

## Revendications

1. Dispositif terminal (1), comprenant :
un logement (3) logeant un conducteur (2) et présentant un trou d'insertion (6) à travers lequel une cible de connexion (100) peut être insérée ;
une portion de verrouillage (4) configurée pour maintenir la cible de connexion (100) insérée à travers le trou d'insertion (6) dans le logement (3) entre la portion de verrouillage (4) et le conducteur (2) pour limiter le déplacement de la cible de connexion (100) dans une direction opposée à une direction d'insertion de la cible de connexion (100) ; et
un indicateur (5) logé dans le logement (3), positionné sur un côté opposé de la portion de verrouillage (4) par rapport au trou d'insertion (6) dans la direction d'insertion, et configuré pour être poussé par la cible de connexion (100) pour se déplacer dans un mode incluant un déplacement linéaire d'une première position à une seconde position,
le logement (3) incluant en outre une section d'affichage (7),
une partie de l'indicateur (5) étant affichable par le biais de la section d'affichage (7) sur un côté externe du logement (3),
un mode d'affichage de la section d'affichage (7) étant différent entre un cas où l'indicateur (5) est dans la première position et un cas où l'indicateur (5) est dans la seconde position,
dans lequel
la section d'affichage (7) est un trou traversant (70) pénétrant à travers le logement (3),
**caractérisé en ce que**
une portion conductrice (20) du conducteur (2) est exposée à travers le trou traversant (70) lorsque l'indicateur (5) est dans la seconde position.

2. Dispositif terminal (1) selon la revendication 1, dans lequel
l'indicateur (5) inclut une marque d'affichage (50),
lorsque l'indicateur (5) est dans la première position, la marque d'affichage (50) est affichée à travers le trou traversant (70) sur le côté externe du logement (3), et lorsque l'indicateur (5) est dans la seconde position, la marque d'affichage (50) n'est pas affichée à travers le trou traversant (70) sur le côté externe du logement (3).

3. Dispositif terminal (1) selon la revendication 1 ou 2, comprenant en outre un ressort (9) configuré pour appliquer une force élastique sur l'indicateur (5) dans la seconde position dans une direction dans laquelle l'indicateur (5) se déplace vers la première position.

4. Dispositif terminal (1) selon la revendication 1 ou 2 comprenant en outre un ressort (9) positionné sur un côté opposé de l'indicateur (5) par rapport au trou d'insertion (6) dans la direction d'insertion.

5. Dispositif terminal (1) selon l'une quelconque des revendications 1 à 4, comprenant en outre une portion de compression (10) positionnée entre la portion de verrouillage (4) et l'indicateur (5) dans la direction d'insertion et configurée pour comprimer la cible de connexion (100) contre le conducteur (2) pour limiter le déplacement de la cible de connexion (100) dans une direction transversale à la direction d'insertion.

6. Dispositif terminal (1) selon l'une quelconque des revendications 1 à 5, dans lequel
la section d'affichage (7) est un trou traversant (70) qui est ouvert dans une première direction transversale à la direction d'insertion, et
dans la première direction, la portion de verrouillage (4), le conducteur (2) et le trou traversant (70) sont positionnés dans cet ordre.

7. Dispositif terminal (1) selon l'une quelconque des revendications 1 à 5, dans lequel
la section d'affichage (7) est un trou traversant (70) qui est ouvert dans une première direction transversale à la direction d'insertion, et
dans la première direction, le conducteur (2), la portion de verrouillage (4) et le trou traversant (70) sont positionnés dans cet ordre.

8. Convertisseur de puissance (200), comprenant :
le dispositif terminal (1) selon l'une quelconque des revendications 1 à 7 ; et
un circuit de conversion de puissance (12) connecté électriquement au conducteur (2) du dispositif terminal (1).
